# EUROPÄISCHE PATENTSCHRIFT

(11) **EP 1 388 204 B1**
(45) Veröffentlichungstag und Bekanntmachung des Hinweises auf die Patenterteilung: **28.11.2012**
(21) Anmeldenummer: 02729816.5
(22) Anmeldetag: 23.03.2002
(51) Int. Cl.: H02P 7/00, B60H 1/00

(54) **ANTRIEBSAGGREGAT**
DRIVE UNIT
UNITE D'ENTRAINEMENT

(30) Priorität: 04.05.2001 DE 10121766
(43) Veröffentlichungstag der Anmeldung: 11.02.2004
(73) Patentinhaber: ROBERT BOSCH GMBH, 70442 Stuttgart (DE)
(72) Erfinder: VOGT, Richard, 77731 Willstaett (DE); GOEHRE, Jochen, 76228 Karlsruhe (DE); HELMING, Thomas, 76530 Baden-Baden (DE)
(86) Internationale Anmeldenummer: PCT/DE2002/001083
(87) Internationale Veröffentlichungsnummer: WO 2002/091560

(56) Entgegenhaltungen:
- DE-A- 19 950 147
- GB-A- 2 081 879
- US-A- 5 867 002
- PATENT ABSTRACTS OF JAPAN vol. 1998, no. 09, 31. Juli 1998 (1998-07-31) & JP 10 086629 A (CALSONIC CORP), 7. April 1998 (1998-04-07)

## Beschreibung

Die Erfindung geht aus von einem Antriebsaggregat, insbesondere für ein Gebläse in Kraftfahrzeugen, nach dem Oberbegriff des Anspruchs 1.

Solche Antriebsaggregate werden in Kraftfahrzeugen als Gebläsemotoren bei der Klimatisierung oder Heizung der Fahrgastzelle und bei der Kühlung des Kühlwassers der Brennkraftmaschine eingesetzt. Bei Klima- oder Heizungsgebläsen ist es beispielsweise bekannt, über einen Stufenschalter verschiedene Gebläsestufen anzuwählen, in welchen der an das 12 V-Fahrzeugnetz angeschlossene Gleichstrommotor auf unterschiedliche Drehzahlen eingestellt wird. Bei Kühlgebläsen für das Kühlwasser der Brennkraftmaschine ist es bekannt, die Drehzahl des den Lüfter für den Kühler antreibenden Gleichstrommotors mittels eines elektrischen Vorschaltgeräts in Abhängigkeit von Daten der Brennkraftmaschinensteuerung einzustellen.

Ein bekanntes Vorschaltgerät zur Steuerung eines Gleichstrommotors (DE 197 56 461 A1) weist einen als MOSFET ausgebildeten Halbleiterschalter auf, der in Reihe mit dem Gleichstrommotor geschaltet ist und dessen Steuerelektrode mit einem pulsweitenmodulierten Steuersignal beaufschlagt wird. Damit wird dem Gleichstrommotor durch den Halbleiterschalter eine mittlere Spannung zur Verfügung gestellt, deren Größe von dem Modulationsgrad des Steuersignals abhängt. Mit Abnehmen der mittleren Spannung sinkt die Drehzahl des Gleichstrommotors. Das Steuersignal wird in Abhängigkeit von einem Sollwert-Istuvert-Vergleich der Leistung des Glelchstrommotors generiert. Möglich ist auch die Generierung des Steuersignals aus einer z.B. manuell vorgegebenen Solldrehzahl und Verzicht auf einen Drehzahlregelkreis.

Aus der DE 199 50 147 A geht ferner ein Antriebsaggregat mit einem an einem Gleichspannungsnetz betriebenen elektrischen Motor und mit einer Vorrichtung zur Steuerung der Drehzahl des Motors durch Veränderung der am Motor anliegenden Betriebsspannung hervor, wobei die Vorrichtung mehrere Widerstände und mehrere Halbleiterschalter zur wahlweisen Reihenschaltung des Motors mit mindestens einem der Widerstände aufweist.

### Vorteile der Erfindung

Das erfindungsgemäße Antriebsaggregat mit den Merkmalen des Anspruchs 1 hat gegenüber den bekannten Antriebsaggregaten den Vorteil, dass eine stufenweise Einstellung der Drehzahl des Motors sehr kostengünstig realisiert werden kann. Dazu ist vorgesehen, dass für n + 1 Drehzahlstufen die Vorrichtung n Reihenschaltungen aus jeweils einem Widerstand und einem Halbleiterschalter sowie einen in Reihe mit dem Motor am Gleichspannungsnetz liegenden weiteren Halbleiterschalter aufweist und dass jede der n Reihenschaltungen dem Halbleiterschalter der Reihenschaltung für die folgende Drehzahlstufe parallelgeschaltet und die letzte Reihenschaltung dem weiteren Halbleiterschalter parallelgeschaltet ist. Zur Erreichung von um gleiche Drehzahldifferenzen abgestufte Drehzahlstufen können die Widerstände gleich groß gewählt werden, wobei die Halbleiterschalter zur Nutzung von Kostenvorteilen entsprechend ihrer unterschiedlichen Strombelastungen unterschiedlich variiert werden können. Mit Schließen des weiteren Halleiterschalters ist die maximale Drehzahl eingestellt. Da die Halbleiterschalter nicht wie bei dem bekannten Vorschaltgerät getaktet, sondern in der Weise betrieben werden, dass jeweils ein Halbleiterschalter voll durchgeschaltet und die übrigen Halbleiterschalter voll gesperrt sind, weist das Antriebsaggregat eine unkritische elektromagnetische Verträglichkeit (EMV) auf. Durch die in den weiteren Ansprüchen aufgeführten Maßnahmen sind vorteilhafte Weiterbildungen und Verbesserungen des im Anspruch 1 angegebenen Antriebsaggregats möglich.

Sie treten bei Verwendung von niederohmigen Halbleiterschaltem in diesen nur vernachlässigbar kleine Verlustleistungen auf, so dass auf großvolumige Kühlkörper verzichtet werden kann.

Die Vorrichtung zur Drehzahlsteuerung ist bauklein und ist beispielsweise gemäß einer vorteilhaften Ausführungsform der Erfindung in einen Anschlussstecker des Antriebsaggregats integrierbar.

### Zeichnung

Die Erfindung ist anhand eines in der Zeichnung dargestellten Ausführungsbeispiels in der nachfolgenden Beschreibung näher erläutert. Die einzige Figur zeigt ein Schaltbild eines in vier Gebläsestufen betreibbaren Gebläses.

### Beschreibung der Ausführungsbeispiele

Das in der Figur im Schaltbild dargestellte Gebläse ist für den Einsatz in Kraftfahrzeugen bestimmt und wird am 12 V-Gleichspannungsnetz des Kraftfahrzeugs betrieben. Es weist ein Gebläse- oder Lüfterrad 11 auf, das mit einem Antriebsaggregat gekoppelt ist. Das Gebläse kann in vier Gebläsestufen mit unterschiedlichen Drehzahlen betrieben werden, wozu das Antriebsaggregat einen das Gebläserad 11 antreibenden, als Gleichstrommotor ausgeführten elektrischen Motor 12 und eine Vorrichtung zur Steuerung der Drehzahl des Motors 12, im folgenden Drehzahlsteuervorrichtung 13 genannt, aufweist,

Wie in der Figur schematisch angedeutet ist, ist die Drehzahlsteuervorrichtung 13 in einem Anschlussstecker 14 des Antriebsaggregats bzw. des Gebläses integriert, der zwei Steckerkontakte 15, 16 zum Anschließen an das Gleichspannungsnetz U_{Bal} des Kraftfahrzeugs und einen Steckerkontakt 17 zur Eingabe eines Datensignals für die Gebläsestufeneinstellung aufweist.

Die Drehzahlsteuervorrichtung 13 weist mehrere Widerstände R1 - R3 und mehrere Halbleiterschalter in Form von Leistungstransistoren T1 - T3 auf, die hier als Low-Side-Power-MOSFET-Switches ausgeführt sind. Für die im Ausführungsbeispiel realisierten vier Gebläse- oder Drehzahlstufen weist die Drehzahlsteuervorrichtung 13 drei Reihenschaltungen aus jeweils einem Widerstand R1 - R3 und einem Transistor T1 - T3 sowie einen ebenfalls als Power-MOSFET-Switch ausgebildeten weiteren Transistor T4 auf. Jede der drei Reihenschakungen ist dem Transistor der Reihenschaltung für die folgenden Drehzahlstufe parallelgeschaltet. So ist die Reihenschaltung aus Widerstand R1 und Transistor T1 dem Transistor T2 und die Reihenschaltung aus Widerstand R2 und Transistor T2 dem Transistor T3 parallelgeschaltet. Die letzte Reihenschaltung aus Widerstand R3 und Transistor T3 ist dem weiteren Transistor T4 parallelgeschaltet, der in Reihe mit dem Motor 12 am Gleichspannungsnetz U_{Bat} liegt. Sind n + 1 Drehzahlstufen vorgesehen, so sind n Reihenschaltungen aus jeweils einem Widerstand R und einem Transistor T vorhanden, wobei - wie beschrieben - jede der n Reihenschaltungen dem Transistor der Reihenschaltung für die folgende Drehzahlstufe parallelgeschaltet und die letzte Reihenschaltung aus Widerstand und Transistor dem weiteren Transistor T parallelgeschaltet ist, der - wie beschrieben - in Reihe mit dem Motor 12 am Gleichspannungsnetz U_{Bat} liegt. Die Steuerelektroden der Transistoren T1 - T4, im Falle der MOSFETs deren Gate, sind an einem mit seinem Eingang am Steckerkontakt 17 liegenden Steuergerät 18 angeschlossen, das die Transistoren T1 - T4 selektiv leitend schaltet. Dabei ist immer nur einer der Transistoren T1 - T4 voll durchgesteuert, wahrend die übrigen gesperrt sind. Entsprechend dem über den Steckerkontakt 17 an dem Eingang des Steuergerats 18 anliegenden Datensignal erzeugt das Steuergerat 18 ein das Durchsteuern des Transistors bewirkendes Schaltsignal für einen der Transistoren T1- T4, das solange ansteht, bis das Datensignal geandert wird. Zur Einschaltung der kleinsten Gebläsestufe, in welcher der Motor 12 mit kleinster Drehzahl läuft, wird der Transistor T1 mit dem Schaltsignal belegt Die am Motor 12 anliegende Betriebsspannung wird um den von den Widerständen R1 - R3 erzeugten Spannungsabfall gegenüber der Netzgleichspannung U_{Bat} reduziert und dadurch die Drehzahl gegenüber der Nenndrehzahl des Motors 12 maximal abgesenkt In der größten Geblasestüfe bei maximaler Drehzahl des Motors 12 ist das Steuersignal dem weiteren Transistor T4 zugeführt. Der Motor 12 liegt an der Netzgleichspannung U_{Bat} und läuft mit Nenndrehzahl. Die übrigen Transistoren werden jeweils gesperrt gehalten.

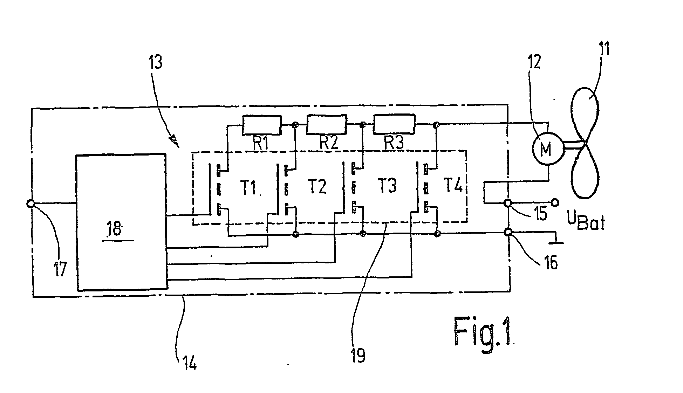

Die In den einzelnen Transistoren T1 - T4 entstehende Verlustleistung hängt von dem Durchlasswiderstand der Transistoren R_{DS(on)} und dem Motorstrom I ab und beträgt jeweils I² * R_{DS(on)}. Diese Verlustleistung kann klein gehalten werden, wenn niederohmige Transistoren T1 - T4 verwendet werden. Zusätzlich kann man Kostenvorteile dadurch erreichen, dass die Transistoren T1 - T4 entsprechend ihrer unterschiedlichen Belastung unterschiedlich dimensioniert werden, wobei der Transistor T1 am wenigsten und der Transistor T4 am stärksten belastet wird. Aufgrund der geringen Verlustleistung der Transistoren T1- T4 können die erforderlichen Kühlflächen für die Transistoren T1 - T4 relativ klein gehalten werden und alle Transistoren T1- T4 auf einen gemeinsamen Kühlkörper 19 vereinigt werden, der in Fig. 1 strichliniert angedeutet ist.

## Patentansprüche

1. Antriebsaggregat, insbesondere für ein Gebläse in Kraftfahrzeugen, mit einem an einem Gleichspannungsnetz betriebenen elektrischen Motor (12) und mit einer Vorrichtung (13) zur Steuerung der Drehzahl des Motors (12) durch Verändern der am Motor (12) anliegenden Betriebsspannung, wobei die Vorrichtung (13) n Widerstände (R1-R3) und n Halbleiterschalter (T1-T3) zur wahlweisen Reihenschaltung des Motors (12) mit mindestens einem der Widerstände (R1-R3) aufweist, **dadurch gekennzeichnet, dass**
für n + 1 Drehzahlstufen die Vorrichtung (13) n Reihenschaltungen aus jeweils einem Widerstand (R1-R3) und einem Halbleiterschaker (T1-T3) sowie einen in Reihe mit dem Motor (12) am Gleichspannungsnetz (U_{Bat}) liegenden weiteren Halbleiterschalter (T4) aufweist,
dass jede der n Reihenschaltungen dem Halbleiterschalter (T1-T3) der Reihenschaltung für die folgende Drehzahlstufe parallelgeschaltet ist, und
dass die letzte Reihenschaltung dem weiteren Halbleiterschalter (T4) parallelgeschaltet ist

2. Antriebsaggregat nach Anspruche 1, **dadurch gekennzeichnet, dass** die Halbleiterschalter (T1-T4) als niederohmige Leistungsschalter ausgebildet sind.

3. Antriebsaggregat nach einem der vorhergehenden Ansprüche, **dadurch gekennzeichnet, dass** die Steuerelektroden der Halbleiterschalter (T1-T4) an einem Steuergerät (18) angeschlossen sind, das einen Eingang (17) zum Zuführen von Datensignalen aufweist.

4. Antriebsaggregat nach einem der vorhergehenden Ansprüche 2 oder 3, **dadurch gekennzeichnet, dass** als Halbleiterschalter (T1-T4) Low-Side-Power-MOSFET-Switches eingesetzt sind.

5. Antriebsaggregat nach einem der vorhergehenden Ansprüche, **dadurch gekennzeichnet, dass** die Vorrichtung (13) zur Steuerung der Drehzahl In einem Anschlußstecker (14) integriert ist.

## Claims

1. Drive assembly, in particular for a fan in motor vehicles, having an electric motor (12) which is operated from a DC voltage supply system and having an apparatus (13) for controlling the rotation speed of the motor (12) by changing the operating voltage which is applied to the motor (12), with the apparatus (13) having n resistors (R1-R3) and n semiconductor switches (T1-T3) for selectively connecting the motor (12) in series to at least one of the resistors (R1-R3), **characterized in that**
for n + 1 rotation speed stages, the apparatus (13) has n series circuits, each comprising a resistor (R1-R3) and a semiconductor switch (T1-T3), and also has a further semiconductor switch (T4) which is connected to the DC voltage supply system (U_{Bat}) in series with the motor (12),
**in that** each of the n series circuits is connected in parallel to the semiconductor switch (T1-T3) of the series circuit for the following rotation speed stage, and
**in that** the last series circuit is connected in parallel to the further semiconductor switch (T4).

2. Drive assembly according to Claim 1, **characterized in that** the semiconductor switches (T1-T4) are in the form of low-impedance circuit breakers.

3. Drive assembly according to either of the preceding claims, **characterized in that** the control electrodes of the semiconductor switches (T1-T4) are connected to a controller (18) which has an input (17) for supplying data signals.

4. Drive assembly according to either of the preceding Claims 2 and 3, **characterized in that** the semiconductor switches (T1-T4) used are low-side power MOSFET switches.

5. Drive assembly according to one of the preceding claims, **characterized in that** the apparatus (13) for controlling the rotation speed is integrated in a connection plug (14).

## Revendications

1. Ensemble d'entraînement, notamment pour un ventilateur de véhicule automobile, présentant :
un moteur électrique (12) alimenté par un réseau à tension continue et un dispositif (13) de commande de la vitesse de rotation du moteur (12) par modification de la tension de service appliquée sur le moteur (12),
le dispositif (13) présentant n résistances (R1-R3) et n commutateurs semi-conducteurs (T1-T3) qui permettent de raccorder sélectivement le moteur (12) en série sur au moins une des résistances (R1-R3), **caractérisé en ce que**
pour n+1 étages de vitesse de rotation, le dispositif (13) présente n circuits série constitués chacun d'une résistance (R1-R3), d'un commutateur semi-conducteur (T1-T3) et d'un autre commutateur semi-conducteur (T4) raccordé au réseau (U_{Bat}) à tension continue en série avec le moteur (12),
**en ce que** chacun des n circuits série est raccordé en parallèle au commutateur semi-conducteur (T1-T3) du circuit série prévu pour les étages suivants de vitesse de rotation et
**en ce que** le dernier circuit série est raccordé en parallèle à l'autre commutateur semi-conducteur (T4).

2. Ensemble d'entraînement selon la revendication 1, **caractérisé en ce que** les commutateurs semi-conducteurs (T1-T4) sont configurés comme commutateurs de puissance à basse résistance ohmique.

3. Ensemble d'entraînement selon l'une des revendications précédentes, **caractérisé en ce que** les électrodes de commande des commutateurs semi-conducteurs (T1-T4) sont raccordées à un appareil de commande (18) qui présente une entrée (17) permettant d'y introduire des signaux de données.

4. Ensemble d'entraînement selon l'une des revendications 2 ou 3 qui précèdent, **caractérisé en ce que** les commutateurs semi-conducteurs (T1-T4) utilisés sont des commutateurs MOSFET dits "low side power".

5. Ensemble d'entraînement selon l'une des revendications précédentes, **caractérisé en ce que** le dispositif de commande (13) qui commande la vitesse de rotation est intégré dans une fiche de raccordement (14).
